# EUROPEAN PATENT SPECIFICATION

(11) **EP 2 261 178 B1**
(45) Date of publication and mention of the grant of the patent: **13.01.2016**
(21) Application number: 10165600.7
(22) Date of filing: 11.06.2010
(51) Int. Cl.: C02F 1/52, C02F 1/38, C02F 1/66, C02F 9/00

(54) **Spiral mixer for floc conditioning**
Spiralenmixer zur Flockenaufbereitung
Mélangeur à spirale pour conditionnement de floc

(30) Priority: 12.06.2009 US 484005
(43) Date of publication of application: 15.12.2010
(73) Proprietor: Palo Alto Research Center Incorporated, Palo Alto, California 94304 (US)
(72) Inventor: Lean, Meng H., Santa Clara, CA 95054 (US); Volkel, Armin R., Mountain View, CA 94040 (US); Kole, Ashutosh, Palo Alto, CA 94306 (US); Seo, Jeonggi, Albany, CA 94706 (US); Parekh, Nitin, Los Altos, CA 94024 (US)
(74) Representative: Grünecker Patent- und Rechtsanwälte PartG mbB

(56) References cited:
- EP-A1- 2 058 284

## Description

### BACKGROUND

The core elements of conventional water treatment include the sequential process steps of coagulation, flocculation, sedimentation and physical filtration. These process steps require corresponding physical structures such as coagulation basins and flocculation basins where portions of the respective processes take place. Typically, chemical coagulants are used to screen Coulomb repulsion (i.e., neutralize charge) and promote aggregation of sub-micron particulates into pin floc. The time needed to aggregate (i.e., aggregation time) is determined by several parameters including concentration and size of aggregates.

Flocculants in the form of long chain polymers can then be added to anchor the flocs to form larger entities that settle faster in the sedimentation basin. The hydraulic retention time through the first 3 stages may be 5-10 hours, depending on the input water quality and the facility, and require a substantial physical footprint and initial infrastructure costs.

A transformative approach to the practice of conventional water treatment has been taught in the applications such as those incorporated herein by reference. Features of this approach include: high scalability, modularity, small footprint, high throughput, purely fluidic, continuous flow, membrane-less, size selective cut-off, and accelerated agglomeration kinetics. The described systems will work with particulates of any density, but especially those with neutral buoyancy. These features allow reduced coagulant dosage by 50% to achieve the same turbidity reduction; which may be attributed to the compact (i.e., dense) and self-limiting narrow size distribution of pin floc resulting from fluid shear effects. The combined effects allow for extraction of micron sized pin flocs in fluidic structures to potentially eliminate flocculation and sedimentation steps, resulting in significant savings through reduced land and chemical cost, operational overhead, and faster processing time from raw to finished water.

Conventional mixing is achieved through active stirring (e.g., with rotors) or forcing the water and coagulant to flow through passive serpentine channels to create chaotic flows to facilitate turbulent dispersion of chemicals to reduce contact time (CT). Since contact time is typically short, the hydraulic retention time in seconds through the channels may be sufficient for effective mixing. Conventional floc formation takes place in large basins where perikinetic aggregation (diffusion driven) is very slow. Orthokinetic aggregation (shear driven) is much faster, especially for the larger aggregates, but not as efficient due to large dimensions and the need to design the convective flow patterns.

### BRIEF DESCRIPTION

A system and method for treatment of water. An inlet is operative to receive source water having particles therein. A spiral mixer has a defined spiral channel operative to mix the source water with a well-controlled continuous stream of coagulant material and an alkalinity material. The spiral mixer is configured to perform very rapid in-line mixing of coagulant and other chemicals, nucleate primary aggregates homogeneously throughout the source water, and initiate controlled growth of these primary aggregates into dense and compact aggregates within a spiral channel of the spiral mixer. A buffer tank is operative to receive the dense aggregates and allow them to grow further beyond the cut-off size of the following separator. A spiral separator segregates contents of the buffer tank into affluent and waste water that has the aggregated floc particles therein. An outlet is operative to provide a first path for the affluent, and a second path for the waste water having the aggregated floc particles.

### BRIEF DESCRIPTION OF THE DRAWINGS

FIGURE 1 is a representative view of a system according to the presently described embodiments;

FIGURE 2 is an embodiment of a device used as a spiral mixer;

FIGURES 3A and 3B depict a single spiral device in the form of a helical spiral, and that helical spiral being disposed in a parallel arrangement with a plurality of such devices;

FIGURE 4 depicts an alternative embodiment of a spiral mixing and spiral separation system according to the present embodiments;

FIGURE 5 is a graph with three curves illustrating reactions to turbidity reduction.

### DETAILED DESCRIPTION

The presently described embodiments are directed to systems and methods that perform spiral mixing and spiral separation procedures. The spiral mixer includes an apparatus that allows for well-controlled continuous dosing of coagulant (and other known chemicals used in water treatment) into the source water stream just ahead of the spiral device. The relatively narrow confines of the spiral channels in conjunction with turbulent flow conditions allow for a very rapid distribution of the added chemicals, therefore providing an environment that allows the nucleation of very uniform primary aggregates. Further aggregation of these primary aggregates within the channels is limited to dense and compact aggregates due to the (controlled) high shear rate within the confined spaces of the channel. These uniformly-sized aggregated floc particles can then move and readily be separated without the need for downstream sedimentation. The separation can be accomplished with a spiral separator that is in direct flow contact with the spiral mixer. Optionally, a buffer tank can be placed between the spiral mixer and the spiral separator to allow further growth of the aggregates beyond the cut-off size of the spiral separator. The growth in this buffer tank can be further optimized using additional large seed particles as described in U.S. Serial No. 12/234,373, filed on September 19, 2008 and entitled "Method And System For Seeding With Mature Floc To Accelerate Aggregation In A Water Treatment Process", which is fully incorporated heron in its entirety by this reference. Proof of concept experiments have shown that the more efficient mixing and separation described in these embodiments allows a 50% reduction of coagulant dosage to achieve the same turbidity reduction capability of conventional systems requiring extended sedimentation.

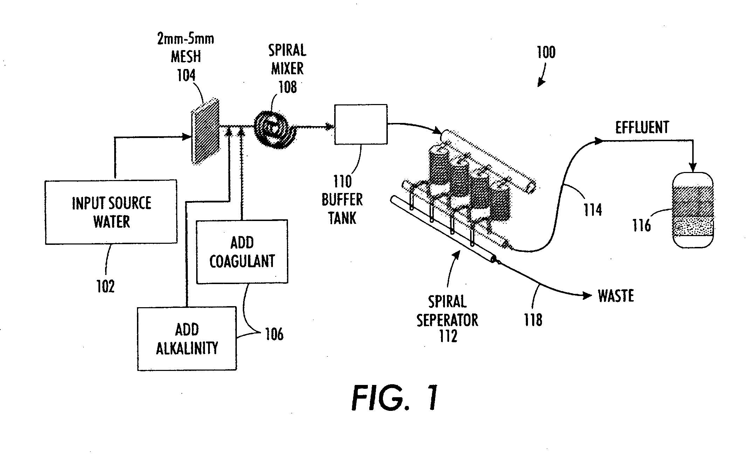

Turning now to FIGURE 1, depicted is a schematic of a water treatment system 100 using spiral mixing and spiral separation according to the concepts of the present embodiments. In some embodiments, a pump is used to move water into system 100. Therefore, in such embodiments, an input source water 102 is understood to include a pump in such designs.

In exemplary system 100, water from the input source water 102 is received at a suitable inlet, which in one form is a mesh filter 104. It should be appreciated mesh filter 104 is designed to filter out relatively large particles from the input source water. In this regard, the filter 104 may be formed of a 2mm - 5mm mesh material. Alkalinity is added continuously in-line in the form of a base to the input source water after filtering by mesh filter 104 to adjust for pH throughout the process. Any suitable base may be used. Coagulant is added continuously to the input water after the base is added and prior to mixing in a spiral mixer 108. Any suitable coagulant is used. Both, the alkalinity as well as the coagulant are added through a known well-controlled dosing system 106 that injects well-defined continuous streams adjusted to the quality of the source water.

Spiral mixer 108 receives the input source water, treated with the alkalinity, and the coagulant. The spiral mixer shown in FIGURE 1 serves a dual purpose. First, it provides a flash mixing function where the incoming source water is angled at the inlet to cause chaotic mixing when the source water impinges on a lower spiral channel wall of spiral mixer 108. Secondly, a high shear driven fluidic flow rate in the channel is custom designed to achieve a shear rate which enhances the growth of dense and compact floc particles within a narrow, but uniform size range. In general, the higher the shear rate, the smaller the aggregated floc. The rule is to design for a floc size to exceed the cut-off size for the downstream spiral separator for high efficiency in separation. The spiral mixer 108 has an output that connects to an (optional) buffer tank 110, where the aggregates can grow further until they exceed the cut-off size of the following separation stage (e.g., in some cases about four minutes).

The output of the buffer tank 110 is connected to the spiral separator 112 which has an effluent output 114. The effluent output 114 directs effluent separated out from the source water input to the spiral separator to filtering mechanism 116. Output of filtering mechanism 116 typically comprises treated water that may be used in a variety of ways. For example, filtering mechanism 116 could be an EPA mandated physical barrier for potable water treatment. Spiral separator 112 has a second output line 118 in which waste water travels. The waste water can be disposed of in an appropriate manner.

Spiral separator 112 may take a variety of forms, However, in at least some forms, the spiral separator operates as described, for example, in U.S. Serial No. 11/606,460, filed on November 20, 2006 and entitled "Particle Separation and Concentration System," U.S. Serial No. 11/936,729, filed on November 7, 2007 and entitled "Fluidic Device and Method for Separation of Neutrally Buoyant Particles," and U.S. Serial No. 11/936,753, filed on November 7, 2007 and entitled "Device and Method for Dynamic Processing in Water Purification." Additionally, spiral mixer 108 may also operate as a spiral mixer-conditioner, where mixing takes place in the channels of the turns operated at or above the critical Dean number (at or greater than 150), and aggregation conditioning occurs in the channels of the turns where the operation is below the critical Dean number.

With continuing attention to spiral separator 112, various fluidic structures, implementations and selected fabrication techniques are used to realize construction of fluidic separation structures that are of a stacked and/or parallel configuration. These contemplated systems provide for efficient input of fluid to be processed, improved throughput, and, in some variations, adjustable and efficient treatment of output fluid.

It will be understood that variations of these devices may be realized based on dimensional scale and channel architecture. However, it is contemplated that the embodiments described herein will be highly scalable to span microscale (0 to 10 mL/min), miniscale (10-1000 mL/min), and macroscale (1-10 L/min) single-channel flow rates.

Planar embodiments utilizing convenient stacking techniques which allow parallel operation are contemplated. In this regard, circular arcs (that do not complete a full physical spiral, but nonetheless are understood herein to be spiral separators) in the range of 180 to 360 degrees allow for sequential stages of transverse flow pattern development, attainment of steady state flow velocity and time for several circulatory passes to sweep particles to a desired position in the fluid flow. Other planar embodiments described herein include helical spirals.

Notable features of such a contemplated device include convenient inlet manifolds and outlet manifolds that include a bifurcating mechanism or splitter to split the fluid into particulate and effluent fluid streams. The contemplated embodiments also allow for a multiple stage device operative to output an extremely narrow band of particulates for further disposal or processing. Other parallel configuration embodiments and fabrication techniques therefore are contemplated. Also, a feedback and/or control system may be implemented with any of the presently described embodiments.

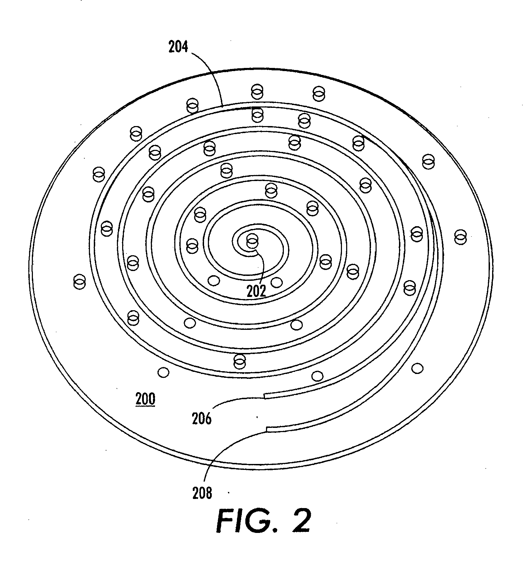

With reference now to FIGURE 2, a single planar spiral mixer device 200 is illustrated. Device 200 has an inlet 202, at least one curved or spiral portion 204 and an outlet 206, 208. The entrance angle of the fluid into the spiral mixer is at 90 degrees to create sufficient turbulence in the entrance to provide chaotic mixing to mix coagulant with the suspended particles in the raw source water. This planar multi-spiral channel device 200, in one form, may be cut from plastic. In one variation of the device 200, the center region of the device 200 near the inlet 202 may be removed to allow access for an inlet coupler to be described hereafter. The spiral portion 204 of the device may take a variety of forms. For example, the spiral portion 204 may be converging or diverging. As a further example, the outlets 206, 208 and inlet 202 locations may be interchanged to suit the application, e.g., for increasing or decreasing centrifugal forces. The planar spiral here may also be a plurality of mixer devices 200 stacked in a parallel manner to allow for N-layers of parallel processing for higher throughput of fluid.

It should be appreciated that the fundamental operation of individual curved or spiral mixer devices such as device 200 or other devices contemplated herein, is described in detail in selected portions of the above referenced patent applications (which are incorporated herein by reference). Therefore, such operation will not be described herein except to the extent that such description will enhance the description of the presently described embodiments.

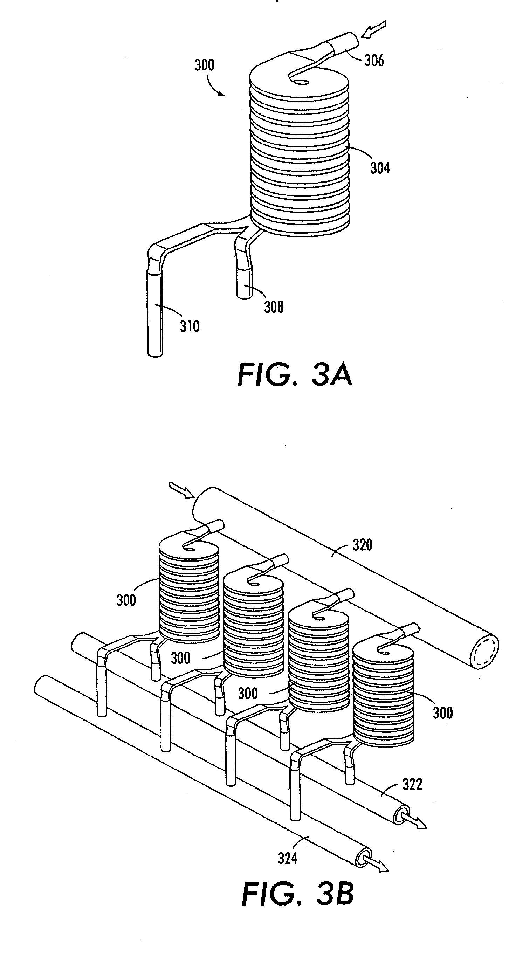

With reference now to FIGURES 3A and 3B, an embodiment is shown for the downstream spiral separator. In FIGURES 3A and 3B, a spiral separator device 300 is illustrated which takes the form of a helical spiral. In this regard, the spiral body portion of the device 304 is a helical spiral that has an inlet 306, a first outlet 308 and a second outlet 310. It will be appreciated that this single channel helical structure resembles a hollow "slinky" type device with the shape of a coiled spring. This device may be fabricated in a variety of manners including in sections using injection molding techniques. The sections are then fused together using known processes before use. Another process for fabricating this device includes the use of extrusion molding techniques wherein the extruded plastic can be air-cooled or dipped in a liquid bath to solidify to its desired shape and structure. The helical coiling can be achieved by controlling the rotation of either the extrusion mandril or the cooling bath. A variety of different material can be used, including thermal plastics such as PVC with Shore "A" hardness, high density polyethylene, polypropylene, polystyrene, and polycarbonate.

As shown in FIGURE 3B, a spiral device such as that shown in FIGURE 3A can be disposed in a parallel arrangement to increase throughput of the system. As shown, spiral devices 300 are all connected to an input main 320 from a fluid manifold and the respective first outlets of the devices 300 are connected to a first outlet main 322. The second outlets of the devices 300 are connected to a second outlet main 324.

In this regard, the presently described embodiments employ a spiral separator that uses the curved channel of a spiral device to introduce a centrifugal force upon particles such as neutrally buoyant particles (e.g. particles having substantially the same density as water, or the fluid in which the particles reside) flowing in a fluid, e.g. water, to facilitate improved separation of such particles from the fluid. The techniques for separating neutrally buoyant particles are particularly useful here. However, other separation techniques are contemplated as well. For example, some of these techniques utilize forces generated in the flow of the fluid in the curved channel to separate particles as a function of, for example, geometry of the channel and velocity. These forces include centrifugal forces and pressure driven forces, among others.

In the case of neutrally buoyant particles, as such particles flow through the channel, a tubular pinch effect causes the particles to flow in a tubular band. The introduced centrifugal force perturbs the tubular band (e.g. forces the tubular band to flow in a manner offset from a center of the channel), resulting in an asymmetric inertial migration of the band toward the inner wall of the channel. This force balance allows for focusing and compaction of suspended particulates into a narrow band for extraction. The separation principle contemplated herein implements a balance of the centrifugal and fluidic forces to achieve asymmetric inertial equilibrium near the inner sidewall. Angled impingement of the inlet stream towards the inner wall also allow for earlier band formation due to a Coanda effect where wall friction is used to attach the impinging flow. The migration could also be directed to the outer wall based on the selected operating regime.

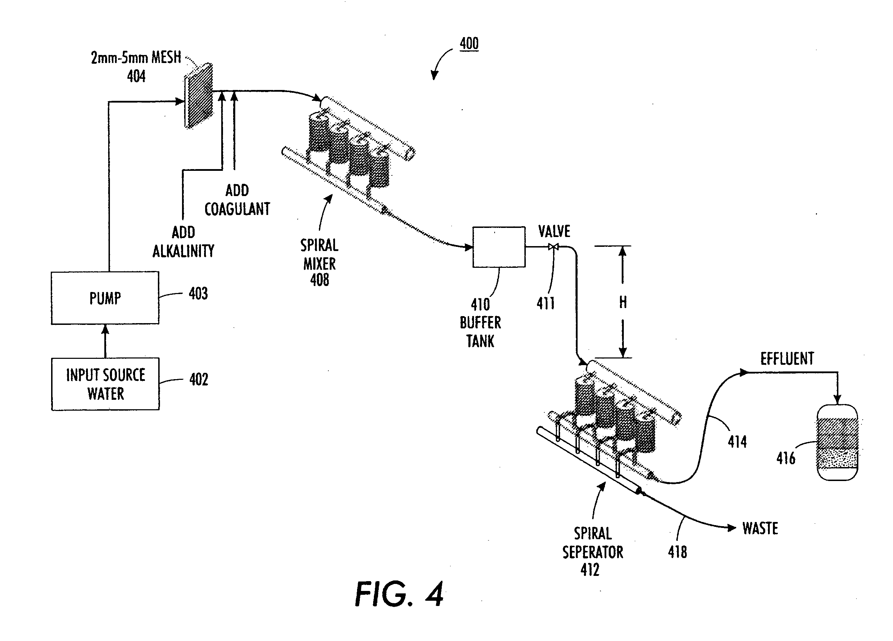

Turning to FIGURE 4 illustrated is an alternative spiral mixing - spiral separation system for in-line floc generation and separation. With reference to system 400, input source water 402 is pumped by a pump 403 through an inlet, such as a mesh 404. The source water 402 then has a well-controlled continuous dosage system for alkalinity material and coagulant streams that are added to the source water 402 prior to being provided to a spiral mixer 408. In this embodiment, spiral mixer 408 is a spiral mixer arrangement with a plurality of stacked spiral mixer components (such as spiral mixer 106 of FIGURE 1), arranged to operate in parallel. Such spiral mixing arrangement increases the mixing throughput and therefore throughput of the overall system. Similar to the concepts of FIGURE 1, the design and operation of system 400, which adds coagulant to the source water prior to the source water entering spiral mixer 408, allows for in-line coagulation and flocculation to occur within the spiral mixer 408. To encourage a generation of uniformly sized floc particles, each of the component spiral mixers of the spiral mixer arrangement 408 are designed to provide a flash mixing function to the source water, and to apply a customized shear rate to ensure the rapid aggregation of the uniformly-sized floc, where the shear rate can be varied to control aggregate size. Varying the shear rate may be accomplished by custom designing of the spiral mixer.

From spiral mixer 408, the mixed source water is provided to buffer tank 410. The source water is then controllably flowed, by use of valve 411, to spiral separator 412, which is located at a height H below buffer tank 410. This gravity-driven flow allows operation without pumping. In the spiral separator 412, the source water is separated and collected into effluent and waste streams. the effluent stream 414 being filtered further by filtering arrangement 416 and waste stream 418, is appropriately handled.

The Jar Test is a standard method used in the water industry to determine chemical dosage for clarification of source waters. Typical test volumes are 2L with determined dosage being scaled up for the operational flow rates. The protocol for a standard Jar Test includes:
- 2 minute rapid mix;
- 2.3 ml of 1 N NaOH (as base) and 110 mg/L of 1% Alum (as coagulant) added to source water with starting turbidity of 26 Nephelometric Turbidity Units (NTU);
- 28 minutes slow mix; and,
- Mixing stopped at 30 min and floc allowed to settle out.

A modified Jar Test Protocol to test the presently described embodiments includes passage of the fluid through a spiral mixer before collection in the jar running the protocol:
- 2 minute rapid mix;
- 2.3 ml of 1 N NaOH (as base) and 110 mg/L of 1% Alum (as coagulant) added to source water with starting turbidity of 26 NTU;
- 28 minutes slow mix; and,
- Mixing stopped at 30 min and floc allowed to settle.

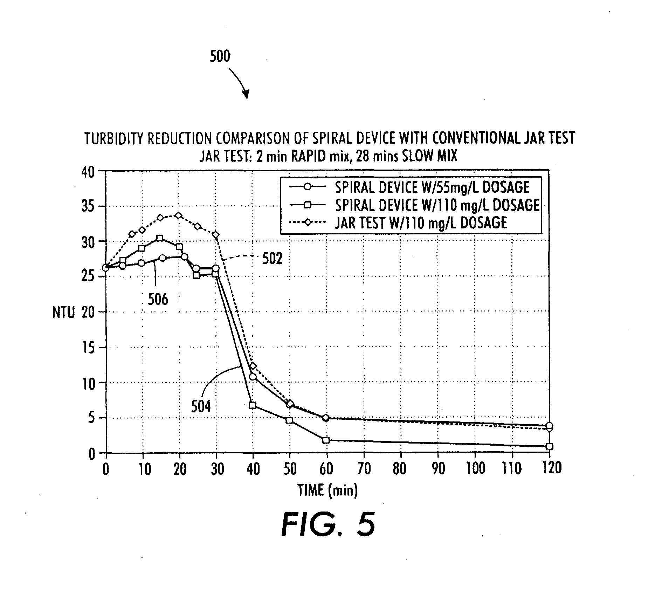

FIGURE 5 sets forth a graph 500 which plots the results of a turbidity reduction comparison of a spiral mixing and spiral separation system versus a combinational jar test. Curve 502 in FIGURE 5 is for the case of the standard jar to where sedimentation begins immediately after the protocol is completed at the end of 30 minutes. Aggregated floc settle out over time, allowing the turbidity to drop. Curve 504 in FIGURE 5 is for the case where the sample water is flowed through the spiral mixer and spiral separator is and collected in the output jar where turbidity is again monitored over time. In comparing with the standard jar test curve, several observations are apparent: (1) the initial increase in turbidity is lower due to the size limiting effect of fluid shear in the fast flowing channel of the spiral mixer; and (2) the final turbidity after 120 minutes is much lower, indicating more efficient mixing and more complete coagulation and sedimentation. The third curve 506 in FIGURE 5 is for the case with 50% reduction in dosage, or 55 mg/L of coagulant. Besides an even lower increase in turbidity for the reasons cited above, the turbidity at 120 minutes is identical to the case with full dosage of the standard jar test. This observation implies that the spiral mixer achieves not only more effective mixing, but the fluid shear also limits the rate and size of the floc formation resulting in uniformly sized dense floc that aggregate more efficiently.

It is understood that for small (sub-micron) particles diffusion driven (perikinetic) aggregation dominates over orthokinetic aggregation (shear driven). For perikinetic type of kinetics, a collision frequency between aggregates (or particles) is determined by the rate with which two diffusing particles find each other.

The rate for orthokinetic aggregation increases with the size of the particles, and for a typical shear rate of 1/s exceeds the perikinetic aggregation rate for particles in excess of 1µm.

In a situation where a species of large particles (> 1µm) is mixed together with small particles (<1µm), we observe two competing aggregation kinetics. The small particles will grow together at the perikinetic aggregation rate. At the same time, the larger particles will "sweep up" the smaller particles at the orthokinetic aggregation rate.

The presently described embodiments result in at least the following aspects:
X Custom designed shear rate for uniform-sized aggregations
X Customizable fluidic design for flow rate
X Throughput through vertical stacking of channels
X Channels may be converging (inward) spiral or diverging (outward) spirals
X Channel width minimize diffusion time to reduce contact time (CT). The width of the spiral channel of the spiral mixer reduces diffusion time so that chemical in the water is thoroughly mixed within the retention time through the spiral mixer device.
X In-line coagulation, flocculation, and separation water treatment system without flocculation and sedimentation basins and much reduced process time

It will be appreciated that several of the above-disclosed and other features and functions, or alternatives thereof, may be desirably combined into many other different systems or applications.

## Claims

1. A system for treatment of water, the system comprising:
an inlet operative to receive source water having particles therein;
a spiral mixer having a defined spiral channel operative to mix the source water with a coagulant material and an alkalinity material; a spiral separator operative to segregate the source water into effluent and waste water having aggregated floc particles therein; and,
an outlet operative to provide a first path for the effluent and a second path for the waste water having aggregated floc particles;
**characterized in that**
the spiral mixer is configured to provide flash mixing and a custom shear rate which enforces growth of dense and uniformly sized aggregates so as to perform inline coagulation and flocculation processes within the defined spiral channel to form aggregated floc particles, the flash mixing achieved by configuration of the spiral mixer with an input angle to cause chaotic mixing when the incoming source water impinges on a lower wall of the spiral channel of the spiral mixer.

2. The system as set forth in claim 1, further comprising a buffer tank operative to receive the aggregated floc particles from the spiral mixer, an output of the buffer tank being connected to said spiral separator.

3. The system as set forth in claim 1 or 2, further comprising a continuous dosage system for adding chemicals as needed to initiate particle growth

4. The system as set forth in claim 1 or 2 wherein the shear rate is a custom designed shear rate selected to limit the generated floc particles in the source water to a generally uniform-size, and where shear rate can be varied to control aggregate size

5. The system as set forth in claim 1, 2 or 3 wherein the spiral mixer is a plurality of individual spiral mixing components arranged and operated in parallel.

6. The system as set forth in claim 1, 2 or 3 wherein the spiral separator is a plurality of individual spiral separating components arranged and operated in parallel.

7. The system as set forth in claim 1, 2 or 3 wherein a diffusion length, for diffusion of the coagulant material and the alkalinity material in the source water is of an order of a width of the spiral channel of the spiral mixer.

8. The system of claim 7 wherein the width of the spiral channel reduces diffusion time so that the chemical is thoroughly mixed within the retention time through the spiral mixer device.

9. The system as set forth in claim 1, 2 or 3 wherein a sedimentation basin and a flocculation basin are not used.

10. The system according to claim 1, 2 or 3 wherein the spiral channel of the spiral separator is a converging spiral.

11. The system according to claim 1, 2 or 3 wherein the spiral channel of the spiral separator is a diverging spiral.

12. A method for treatment of water, the method comprising:
receiving, via an inlet, source water having particles therein;
adding alkalinity to set water pH;
mixing, within a spiral mixer, the source water with a coagulant material; and separating, within a spiral separator, the source water into effluent and waste water, the waste water having uniform-sized aggregations of floc particles;
**characterized in that**
the spiral mixer is configured to provide flash mixing and a custom shear rate which enforces growth of dense and uniformly sized aggregates so as to perform inline coagulation and flocculation processes within the defined spiral channel to form aggregated floc particles, the flash mixing achieved by configuration of the spiral mixer with an input angle to cause chaotic mixing when the incoming source water impinges on a lower wall of the spiral channel of the spiral mixer.

13. The method as set forth in claim 12, further including buffering the source water between the mixing and separating steps.

14. The method as set forth in claim 12 wherein the mixing includes mixing of small particles defined as approximately smaller than 1µm by perikinetic aggregation and larger particles defined as approximately larger than 1µm by orthokinetic aggregation.

## Patentansprüche

1. Ein System zum Behandeln von Wasser, wobei das System umfasst:
einen Einlass, der dafür betreibbar ist, Ausgangswasser, das darin befindliche Teilchen umfasst, zu erhalten;
einen Spiralmischer, der einen festgelegten Spiralkanal aufweist, der dafür betreibbar ist, das Ausgangswasser mit einem Flockungsmaterial und einem Basizitätsmaterial zu mischen; einen Spiralabscheider, der dafür betreibbar ist, das Ausgangswasser in abfließendes Wasser und Abwasser mit aggregierten Flockenteilchen darin zu trennen; und
einen Auslass, der dafür betreibbar ist, einen ersten Weg für das abfließende Wasser und einen zweiten Weg für das Abwasser mit den aggregierten Flockenteilchen darin bereitzustellen;
**dadurch gekennzeichnet, dass**
der Spiralmischer dafür ausgelegt ist, eine Schnellmischung und eine passende Schergeschwindigkeit, die das Wachstum von dichten und gleichförmig großen Aggregaten verstärkt, bereitzustellen, damit innerhalb des festgelegten Spiralkanals Inline-Koagulations- und Flockungsprozesse durchgeführt werden, um aggregierte Flockenteilchen zu bilden, wobei die Schnellmischung durch eine Ausgestaltung des Spiralmischers mit einem Eingangswinkel zum Verursachen einer chaotischen Mischung, wenn das eintretende Ausgangswasser auf einer unteren Wand des Spiralkanals des Spiralmischers auftrifft, erreicht wird.

2. Das System gemäß Anspruch 1, das zusätzlich einen Puffertank umfasst, der dafür betreibbar ist, die aggregierten Flockenteilchen von dem Spiralmischer zu erhalten, wobei ein Ausgang des Puffertanks mit dem Spiralabscheider verbunden ist.

3. Das System gemäß Anspruch 1 oder 2, das zusätzlich ein kontinuierliches Dosierungssystem umfasst, um, wie zum Auslösen des Teilchenwachstums erforderlich, Chemikalien zuzugeben.

4. Das System gemäß Anspruch 1 oder 2, wobei die Schergeschwindigkeit eine passend ausgelegte Schergeschwindigkeit ist, die so gewählt ist, dass die in dem Ausgangswasser erzeugten Flockenteilchen auf eine im Allgemeinen gleichförmige Größe begrenzt werden, und wobei die Schergeschwindigkeit verändert werden kann, um die Größe der Aggregate zu steuern.

5. Das System gemäß Anspruch 1, 2 oder 3, wobei der Spiralmischer aus mehreren einzelnen Spiralmischungskomponenten besteht, die parallel angeordnet sind und parallel betrieben werden.

6. Das System gemäß Anspruch 1, 2 oder 3, wobei der Spiralabscheider aus mehreren einzelnen Spiralabscheidungskomponenten besteht, die parallel angeordnet sind und parallel betrieben werden.

7. Das System gemäß Anspruch 1, 2 oder 3, wobei eine Diffusionslänge für die Diffusion des Flockungsmaterials und des Basizitätsmaterials in dem Ausgangswasser in der Größenordnung einer Breite des Spiralkanals des Spiralmischers liegt.

8. Das System gemäß Anspruch 7, wobei die Breite des Spiralkanals die Diffusionszeit verringert, so dass die Chemikalie während der Laufzeit durch die Spiralmischervorrichtung gründlich gemischt wird.

9. Das System gemäß Anspruch 1, 2 oder 3, wobei kein Absetzbecken und kein Flockungsbecken verwendet werden.

10. Das System gemäß Anspruch 1, 2 oder 3, wobei die Spiralkanal des Spiralabscheiders eine zusammenlaufende Spirale ist.

11. Das System gemäß Anspruch 1, 2 oder 3, wobei der Spiralkanal des Spiralabscheiders eine auseinanderlaufende Spirale ist.

12. Ein Verfahren zur Behandlung von Wasser, wobei das Verfahren umfasst:
Erhalten von Ausgangswasser, das darin befindliche Teilchen aufweist, durch einen Einlass;
Hinzufügen von Basizität, um den pH-Wert des Wassers einzustellen;
Mischen des Ausgangswassers mit einem Flockungsmaterial in einem Spiralmischer; und Trennen des Ausgangswassers in abfließendes Wasser und Abwasser in einem Spiralabscheider, wobei das Abwasser gleichmäßig große Aggregate von Flockenteilchen aufweist;
**dadurch gekennzeichnet, dass**
der Spiralmischer dafür ausgelegt ist, eine Schnellmischung und eine passende Schergeschwindigkeit, die das Wachstum von dichten und gleichmäßig großen Aggregaten verursacht, bereitzustellen, damit innerhalb des festgelegten Spiralkanals Inline-Koagulations- und Flockungsprozesse durchgeführt werden, um aggregierte Flockenteilchen zu bilden, wobei die Schnellmischung durch eine Ausgestaltung des Spiralmischers mit einem Eintrittswinkel zum Verursachen einer chaotischen Mischung, wenn das eintretende Ausgangswasser auf eine untere Wand des Spiralkanals des Spiralmischers auftrifft, erreicht wird.

13. Das Verfahren gemäß Anspruch 12, das außerdem eine Pufferung des Ausgangswassers zwischen dem Mischschritt und dem Abscheideschritt umfasst.

14. Das Verfahren gemäß Anspruch 12, wobei das Mischen ein Mischen von kleinen Teilchen, die so definiert sind, dass sie kleiner als ungefähr 1 µm sind, durch perikinetische Aggregation und von größeren Teilchen, die so definiert sind, dass sie größer als ungefähr 1 µm sind, durch orthokinetische Aggregation umfasst.

## Revendications

1. Système de traitement d'eau, le système comprenant :
une entrée conçue pour recevoir de l'eau de source ayant des particules dedans ;
un mélangeur en spirale ayant un canal en spirale défini conçu pour mélanger l'eau de source avec un matériau coagulant et un matériau d'alcalinité ; un séparateur en spirale conçu pour séparer l'eau de source en effluent et en eaux usées ayant des particules de floc agrégées dedans ; et,
une sortie conçue pour fournir un premier chemin pour l'effluent et un deuxième chemin pour les eaux usées ayant des particules de floc agrégées ;
**caractérisé en ce que**
le mélangeur en spirale est configuré pour fournir un mélange rapide et un taux de cisaillement personnalisé qui impose la croissance d'agrégats denses et de taille uniforme afin d'effectuer des procédés de coagulation et de floculation en ligne dans le canal en spirale défini pour former des particules de floc agrégées, le mélange rapide étant obtenu par configuration du mélangeur en spirale avec un angle d'entrée pour entraîner un mélange chaotique lorsque l'eau de source entrante arrive sur une paroi inférieure du canal en spirale du mélangeur en spirale.

2. Système selon la revendication 1, comprenant en outre un réservoir tampon conçu pour recevoir les particules de floc agrégées du mélangeur en spirale, une sortie du réservoir tampon étant reliée audit séparateur en spirale.

3. Système selon la revendication 1 ou 2, comprenant en outre un système de dosage en continu pour ajouter des produits chimiques si nécessaire afin d'initier la croissance de particules

4. Système selon la revendication 1 ou 2, dans lequel le taux de cisaillement est un taux de cisaillement à conception personnalisée choisi pour limiter les particules de floc générées dans l'eau de source à une taille globalement uniforme, et où le taux de cisaillement peut varier pour contrôler la taille d'agrégats.

5. Système selon la revendication 1, 2 ou 3, dans lequel le mélangeur en spirale est une pluralité de composants de mélange en spirale individuels agencés et fonctionnant en parallèle.

6. Système selon la revendication 1, 2 ou 3, dans lequel le séparateur en spirale est une pluralité de composants de séparation en spirale individuels agencés et fonctionnant en parallèle.

7. Système selon la revendication 1, 2 ou 3, dans lequel une longueur de diffusion, pour la diffusion du matériau coagulant et du matériau d'alcalinité dans l'eau de source est de l'ordre d'une largeur du canal en spirale du mélangeur en spirale.

8. Système de la revendication 7, dans lequel la largeur du canal en spirale réduit le temps de diffusion de sorte que le produit chimique soit soigneusement mélangé pendant le temps de rétention par le dispositif de mélange en spirale.

9. Système selon la revendication 1, 2 ou 3, dans lequel un bassin de sédimentation et un bassin de floculation ne sont pas utilisés.

10. Système selon la revendication 1, 2 ou 3, dans lequel le canal en spirale du séparateur en spirale est une spirale convergente.

11. Système selon la revendication 1, 2 ou 3, dans lequel le canal en spirale du séparateur en spirale est une spirale divergente.

12. Procédé de traitement d'eau, le procédé comprenant le fait :
de recevoir, via une entrée, de l'eau de source ayant des particules dedans ;
d'ajouter l'alcalinité pour régler le pH de l'eau ;
de mélanger, dans un mélangeur en spirale, l'eau de source avec un matériau coagulant ; et
de séparer, dans un séparateur en spirale, l'eau de source en effluent et en eaux usées, les eaux usées ayant des agrégations de particules de floc de taille uniforme ;
**caractérisé en ce que**
le mélangeur en spirale est configuré pour fournir un mélange rapide et un taux de cisaillement personnalisé qui impose la croissance d'agrégats denses et de taille uniforme afin d'effectuer des procédés de coagulation et de floculation en ligne dans le canal en spirale défini pour former des particules de floc agrégées, le mélange rapide étant obtenu par configuration du mélangeur en spirale avec un angle d'entrée pour entraîner un mélange chaotique lorsque l'eau de source entrante arrive sur une paroi inférieure du canal en spirale du mélangeur en spirale.

13. Procédé selon la revendication 12, comportant en outre le fait de tamponner l'eau de source entre les étapes de mélange et de séparation.

14. Procédé selon la revendication 12, dans lequel le mélange comporte un mélange de petites particules définies comme étant approximativement inférieures à 1 µm par agrégation péricinétique et de particules plus grosses définies comme étant approximativement supérieures à 1 µm par agrégation orthocinétique.
